# DEMANDE DE BREVET EUROPEEN

(11) **EP 0 598 959 A1**
(43) Date de publication de la demande: **01.06.1994**
(21) Numéro de dépôt: 92403218.8
(22) Date de dépôt: 27.11.1992
(51) Int. Cl.: B60S 9/08, B60P 1/64

(54) **Jambe de stabilisation formant pied d'appui pour une structure transportable telle qu'un abri technique par exemple**

(71) Demandeur: GIAT INDUSTRIES SOCIETE ANONYME, F-78034 Versailles Cédex (FR)
(72) Inventeur: Gibert, Pierre, F-65000 Tarbes (FR)

(57) **Abrégé**

La jambe de stabilisation comprend au moins deux éléments tubulaires coaxiaux respectivement supérieur (2) et inférieur (3), assemblés l'un à l'autre de manière télescopique, et un système de déploiement (14) pour éloigner ou rapprocher axialement l'élément inférieur (3) par rapport à l'élément supérieur (2). L'élément supérieur (2) est monté pivotant autour d'un axe (13) porté par la structure (S), le mouvement pivotant de la jambe (1) étant contrôlé par un système de pivotement (15) articulé par un axe (21) à la structure (S) et actionné par le système de déploiement (4) de la jambe (1).

L'invention s'applique à la stabilisation d'abris techniques par exemple.

## Description

La présente invention concerne une jambe de stabilisation formant pied d'appui pour une structure transportable telle qu'un abri technique, du type comprenant au moins deux éléments tubulaires coaxiaux respectivement supérieur et inférieur, assemblés l'un à l'autre de manière télescopique par un système de déploiement pour éloigner ou rapprocher axialement les deux éléments tubulaires l'un de l'autre suivant que la jambe passe d'une position repliée où les deux éléments tubulaires sont emboîtés l'un dans l'autre suivant un axe sensiblement vertical, à une position dépliée où les deux éléments tubulaires sont éloignés l'un de l'autre, ou inversement passe de la position dépliée à la position repliée.

D'une manière générale, il faut entendre par abri technique une enceinte transportable qui renferme un appareillage sur lequel travaille une équipe technique, cet appareillage étant tout naturellement fonction des applications envisagées. Ces abris techniques, le plus souvent dénommés shelters, sont transportés par des véhicules poids-lourds équipés de plate-formes. Une fois arrivé sur le site d'utilisation, l'abri technique est stabilisé au sol selon l'une des trois solutions suivantes.

Selon une première solution, l'abri technique est tout simplement déposé sur le sol par des moyens de levage, de préférence solidaires du véhicule poids-lourd, et sa stabilisation au sol est assurée par exemple, soit par des pieds de hauteur réglable supportés par l'abri technique, soit par des cales rapportées. D'une manière générale, cette première solution a le mérite d'être simple, mais elle conduit nécessairement à une stabilisation approximative, notamment en ce qui concerne la position de l'abri technique par rapport à l'horizontale.

Selon une seconde solution, l'abri technique reste en place sur la plate-forme du véhicule poids-lourd de transport, et sa stabilisation au sol est assurée indirectement par des crics ou vérins qui équipent le véhicule poids-lourd.

Selon une troisième solution, l'abri technique reste également en place sur la plate-forme du véhicule poids-lourd de transport, mais sa stabilisation au sol est assurée directement par des bras ou jambes articulés portés par l'abri technique et qui viennent prendre appui sur le sol.

Pour certaines applications, l'appareillage embarqué dans les abris techniques demande une bonne stabilisation au sol pour être dans des conditions de fonctionnement satisfaisantes. C'est le cas notamment pour des installations radars mobiles logées dans un abri technique transportable surmonté d'antennes. Pour de telles installations, il s'avère que la troisième solution technique précitée est de plus en plus utilisée, mais cette solution n'est pas sans présenter des inconvénients.

En effet, d'une manière générale, les jambes de stabilisation utilisées comprennent des vérins escamotables au moyen de parallélogrammes déformables et des moyens de verrouillage en position des vérins, ce qui conduit à des structures complexes présentant un encombrement important, un poids relativement élevé et de nombreux axes d'articulation qui nuisent à une bonne rigidité.

Le but de l'invention est de concevoir des jambes de stabilisation capables de pallier les inconvénients précités grâce à un mécanisme d'articulation plus simple et plus fiable pour assurer le déploiement et le repliement des jambes, et tout en procurant d'autres avantages.

A cet effet, l'invention propose une jambe de stabilisation du type précité caractérisée en ce que la jambe est articulée de façon pivotante à l'abri technique, le mouvement pivotant de la jambe étant contrôlé par un système de pivotement articulé sur l'abri et actionné par le système de déploiement de la jambe.

Selon un mode préférentiel de réalisation de l'invention, le système de pivotement de la jambe comprend un levier articulé de façon pivotante par une extrémité à l'abri technique, une bielle de liaison dont les deux extrémités sont respectivement articulées à l'autre extrémité du levier et à l'extrémité libre de l'élément tubulaire inférieur de la jambe, et un troisième élément tubulaire ou élément intermédiaire monté coulissant sur les éléments tubulaires supérieur et inférieur de la jambe.

Ainsi, selon un tel montage, lorsque l'élément tubulaire inférieur de la jambe se déplace par rapport à l'élément tubulaire supérieur sous l'action du système de déploiement commandé par un organe moteur, tel qu'un moteur électrique par exemple, on obtient simultanément le pivotement du levier par le déplacement de la bielle de liaison reliée à l'élément tubulaire inférieur, le pivotement de la jambe par le déplacement de l'élément tubulaire intermédiaire relié au levier.

La jambe est reliée de façon pivotante à l'abri technique par son élément tubulaire supérieur autour d'un premier axe horizontal, le levier du système de pivotement est relié de façon pivotante à l'abri technique autour d'un second axe horizontal situé à un niveau inférieur par rapport au sol du premier axe, ces axes étant sensiblement dans un même plan vertical, de sorte que, en position repliée de la jambe, les deux éléments tubulaires supérieur et inférieur sont emboîtés l'un dans l'autre à l'intérieur du troisième élément tubulaire avantageusement situé dans le même plan vertical que les deux axes précités, la longueur de cet élément intermédiaire étant légèrement inférieure à la distance séparant les deux axes d'articulation pour que la jambe se positionne verticalement entre ceux-ci.

Avantageusement, la jambe en position repliée est reçue dans un logement, ouvert vers l'extérieur, prévu dans l'abri technique, les parois d'extrémité de ce logement supportant respectivement par exemple deux chapes de support des deux axes d'articulation de la jambe.

Ainsi, le mouvement pivotant de la jambe tel qu'amorcée simultanément avec le déplacement de l'élément tubulaire inférieure au début de la phase de déploiement de la jambe, permet à celle-ci de se dégager de son logement.

Dans la position dépliée, la jambe prend appui sur le sol par un patin monté articulé à l'extrémité de l'élément tubulaire inférieure, la jambe étant inclinée par rapport à la verticale d'un angle de l'ordre d'une dizaine de degrés.

Selon un mode de réalisation, le système de déploiement de la jambe comprend une vis logée à l'intérieur de l'élément supérieur, cette vis entraînée en rotation se déplace le long de la paroi interne filetée de l'élément supérieur, et elle se prolonge par une tige filetée sur laquelle se visse un écrou solidaire de l'élément inférieur.

Selon encore une autre caractéristique de l'invention, la jambe est équipée de moyens qui permettent à un patin articulé à l'extrémité libre de l'élément tubulaire inférieur d'avoir un déplacement sensiblement vertical à la fin de la course de déploiement pour éviter de riper sur le sol. Ces moyens sont constitués par une articulation appropriée prévue entre le levier de pivotement et le troisième élément tubulaire, comme cela sera décrit en détail plus loin.

Une jambe de stabilisation selon l'invention ne présente que deux points de liaison avec l'abri technique, un encombrement minimum une fois repliée dans son logement, un système de déploiement simple et commandé automatiquement sans intervention manuelle.

Un abri technique transportable ou shelter pour une installation radar mobile peut être avantageusement stabilisé au sol au moyen de quatre jambes conformes à l'invention.

D'autres avantages, caractéristiques et détails de l'invention ressortiront de la description explicative qui va suivre faite en référence aux dessins annexés donnés uniquement à titre d'exemple et dans lesquels :
- la figure 1 est une vue en coupe schématique d'une jambe de stabilisation conforme à l'invention en position dépliée ou de service,
- la figure 2 est une vue en perspective réduite de la jambe en position dépliée,
- les figures 3a et 3b sont des vues en coupe partielles et schématiques de la jambe pour illustrer des caractéristiques de son système de pivotement,
- et les figures 4a à 4d illustrent schématiquement les différentes phases de déploiement d'une jambe de stabilisation conforme à l'invention.

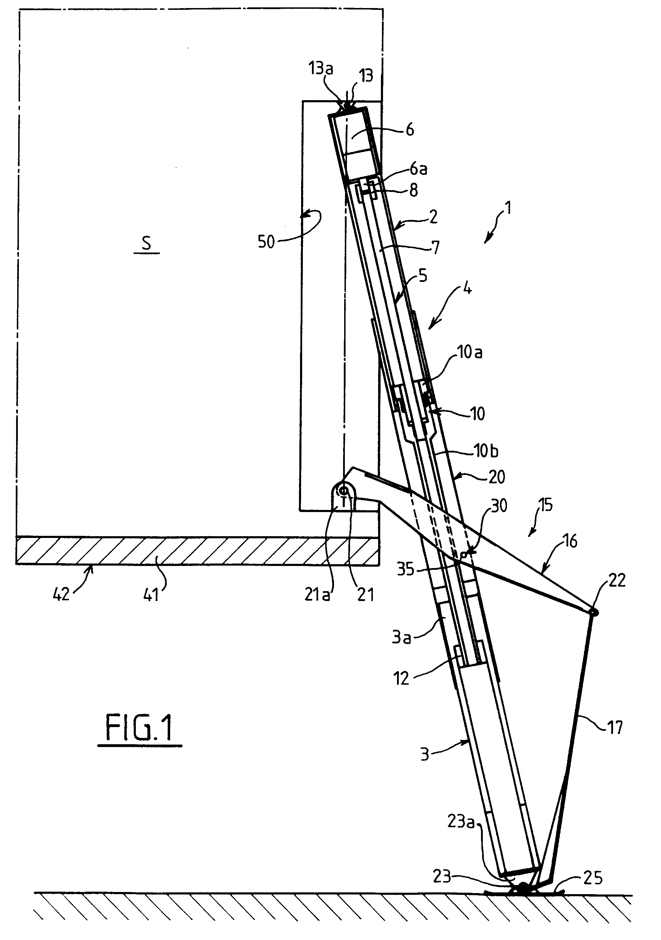

En se reportant à la figure 1, une jambe de stabilisation 1 conforme à l'invention comprend au moins deux éléments tubulaires coaxiaux respectivement supérieur 2 et inférieur 3, assemblés l'un à l'autre de manière télescopique, et un système de déploiement 4 pour éloigner ou rapprocher axialement l'un de l'autre ces deux éléments 2 et 3 suivant que la jambe 1 se déplie ou se replie.

Dans l'exemple considéré ici, le système de déploiement 4 de la jambe 1 comprend un dispositif de liaison télescopique 5, du type mécanique, monté entre les éléments supérieur 2 et inférieur 3, et actionné par un moteur 6 logé à l'intérieur de l'élément supérieur 2 et vers l'extrémité libre de celui-ci. Le dispositif de liaison 5 comprend un axe d'entraînement 7 logé à l'intérieur de l'élément supérieur 2 et dont une extrémité est solidaire en rotation de l'arbre de sortie 6a du moteur 6 par un accouplement 8, connu en soi. L'autre extrémité de l'axe 7 s'engage dans la tête 10a d'une vis creuse 10 qui est solidaire en rotation de l'axe 7 par des cannelures par exemple pour permettre à ce dernier de coulisser à l'intérieur de la tige creuse 10b de la vis 10. La tête 10a de la vis 10 est filetée extérieurement pour se visser dans l'élément supérieur 2 dont la paroi interne est filetée. Le dispositif de liaison 5 est complété par un écrou 12 vissé sur la tige 10b de la vis 10 qui est filetée extérieurement. Cet écrou 12 est immobilisé en rotation au fond d'un tube creux 3a emmanché à force à l'intérieur de l'élément inférieur 3 de manière à permettre à cet élément 3 de se déplacer axialement par rapport à l'élément supérieur 2 lorsque la vis 10 est entraînée en rotation par l'axe 7. Il est à noter que les filetages de la tête 10a et de la queue 10b de la vis 10 ont le même pas, mais sont inversés l'un par rapport à l'autre.

D'une manière générale, la jambe de stabilisation 1 est montée pivotante dans un plan vertical par son élément supérieur 2 à une structure S, telle qu'un abri technique, dont elle forme un pied d'appui. Pour cela, l'élément supérieur 2 de la jambe 1 est articulé autour d'un axe horizontal 13 supporté par une chape 13a solidaire de l'abri technique S.

Le mouvement pivotant de la jambe 1 autour de l'axe 13 est contrôlé par un dispositif de pivotement 15 qui, dans l'exemple considéré ici, comprend un levier basculant 16, une bielle de liaison 17 et un troisième élément tubulaire ou élément intermédiaire 20. Le dispositif de pivotement est actionné par le système de déploiement 4.

Plus précisément, le levier 16 est monté pivotant à une extrémité autour d'un axe horizontal 21 supporté par une chape 21a fixée à l'abri technique S. L'axe d'articulation 21 est situé par rapport au sol à un niveau inférieur à celui de l'axe d'articulation 13 entre l'élément supérieur 2 de la jambe 1 et l'abri technique S. Ces deux axes 13 et 21 sont de préférence dans un même plan vertical, et ils sont les deux éléments de liaison entre la jambe 1 et l'abri technique S.

L'autre extrémité du levier 16 est articulée par un axe 22 à une extrémité de la bielle de liaison 17 dont l'autre extrémité est articulée à l'extrémité libre de l'élément inférieur 3 par un axe 23 porté par une chape 23a fixée à l'élément inférieur 3. Un patin 25 est monté articulé sur l'axe 23 et sert de moyen d'appui au sol pour la jambe 1. L'élément tubulaire intermédiaire 20 est monté coulissant sur les deux éléments supérieur 2 et inférieur 3, et il est articulé au levier 16, sensiblement dans la partie médiane de celui-ci, au moyen d'un dispositif d'articulation 30.

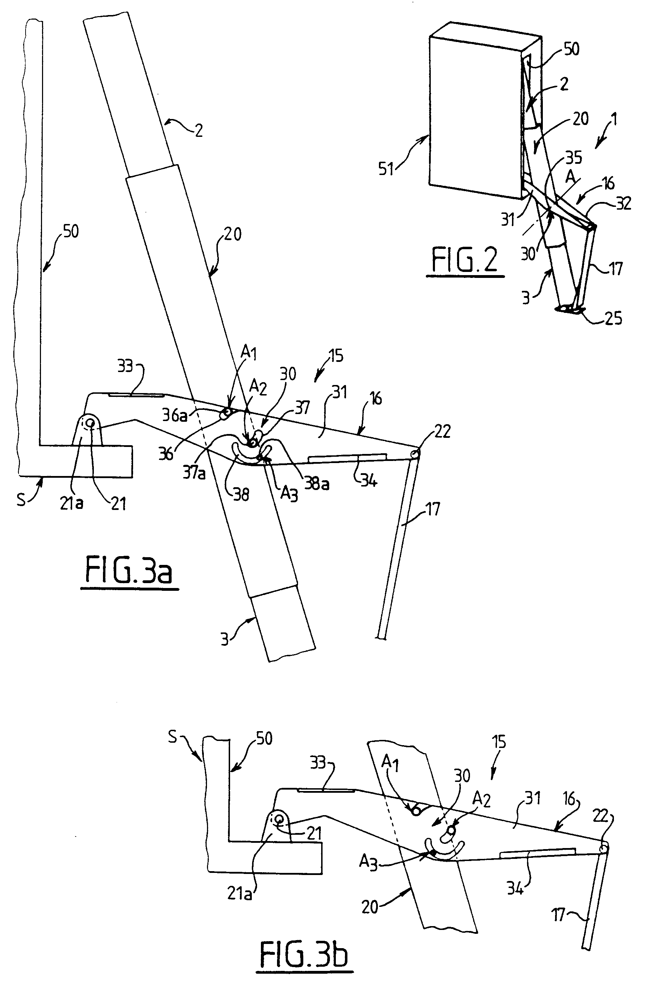

Dans l'exemple considéré ici, comme cela est visible sur les figures 1 et 2, le levier 16 est formé de deux bras parallèles 31 et 32 réunis par deux entretoises d'extrémité 33 et 34, la jambe 1 traversant le levier 16 par l'ouverture délimitée entre les bras et les entretoises.

L'articulation 30 entre le levier 16 et l'élément tubulaire intermédiaire 20 est par exemple constituée de deux doigts 35 axialement alignés sur un axe A. Ces deux doigts 35 sont supportés par l'élément intermédiaire et s'engagent respectivement dans les deux bras 31 et 32 du levier 16.

Selon un mode préférentiel de réalisation illustré aux figures 3a et 3b, l'articulation 30 entre le levier 16 et l'élément intermédiaire 20 comprend trois axes parallèles A1, A2 et A3 associés respectivement à trois jeux de lumières 36, 37 et 38. Plus précisément, l'axe A1 est formé par deux doigts 36a axialement alignés qui sont respectivement reçus dans deux lumières 36 en vis-à-vis prévues dans les deux bras 31 et 32 du levier 16. Les deux lumières 36 sont arquées suivant un rayon de courbure r, et elles débouchent à une extrémité sur les bords supérieurs des deux bras 31 et 32. Un montage analogue est prévu pour les axes A2 et A3 associés aux lumières 37 et 38. Les deux lumières 37 respectivement associées à deux doigts 37a axialement alignés qui définissent l'axe A2, sont situés dans la partie centrale du levier 16 et elles ont le même rayon de courbure r que les lumières 36. Les lumières 36 et 37 associées à chaque bras 31 et 32 du levier 16 sont globalement diamétralement opposées sur un cercle de rayon r. Les deux lumières 38 respectivement associées à deux doigts 38a axialement alignés qui définissent l'axe A3, sont situées en dessous des lumières 37 et elles ont un rayon de courbure r1. D'une manière générale, cette articulation 30 permet d'éviter le ripage du patin 25 sur le sol, comme cela sera explicité plus loin.

La jambe de stabilisation 1 est destinée à servir de pied d'appui pour un abri technique ou shelter S transportable qui se présente généralement sous la forme d'un bloc parallélépipédique dont les dimensions sont telles qu'il peut être supporté et stabilisé par quatre jambes de stabilisation 1 conformes à l'invention disposées respectivement aux quatre coins de l'abri technique.

L'abri technique S repose par sa face inférieure sur la plate-forme 41 d'un véhicule de transport 42, chaque jambe 1 étant en position repliée. Dans cette position, la longueur de la jambe 1 correspond globalement à la longueur de l'élément intermédiaire 20 dans lequel les deux éléments supérieur 2 et inférieur 3 sont emboîtés l'un dans l'autre.

D'une manière générale, la jambe 1 en position repliée est verticale et avantageusement située dans un logement 50 ouvert vers l'extérieur de l'abri technique S. La hauteur de ce logement 50 supérieure est légèrement supérieure à la longueur de l'élément intermédiaire 20. Les deux chapes 13a et 21a qui supportent les deux axes d'articulation 13 et 21 de la jambe sont fixées aux deux parois d'extrémité du logement 50, respectivement.

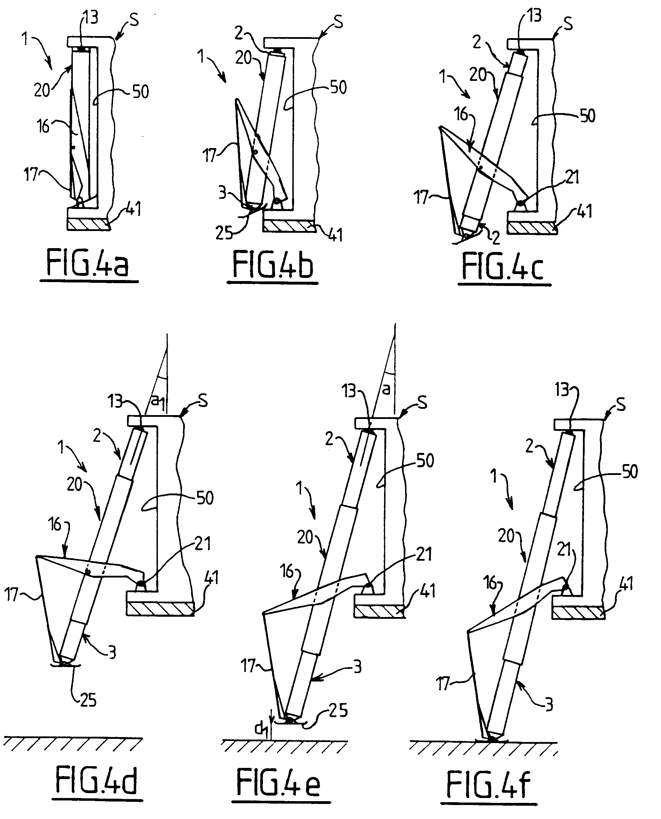

Dans cette position de stockage, les éléments constitutifs du dispositif de liaison télescopique 5 ont les positions suivantes. La tête 10a est située au voisinage du moteur 6, l'axe 7 est logé à l'intérieur de la tige 10b, l'écrou 8 est situé au voisinage de la tête 10a de la vis 10 et le levier 16 s'étend parallèlement à l'élément intermédiaire 20. Cette position de rangement est schématiquement représentée à la figure 4a.

Une fois le véhicule 42 arrivé sur le site où l'abri technique S doit être opérationnel, les quatre jambes de stabilisation 1 vont être dépliées simultanément en commandant l'ensemble des moteurs 6 associés suivant un sens de rotation déterminé.

Il va être décrit ci-après le principe de déploiement d'une seule jambe de stabilisation 1 en référence aux figures 4b à 4f.

Le déploiement de la jambe 1 s'effectue globalement en trois phases.

Dans une première phase, il est nécessaire de dégager la jambe 1 de son logement 50 pour qu'elle puisse se déployer, l'élément inférieur 3 s'éloignant progressivement de l'élément supérieur 2.

Pour dégager la jambe 1 de son logement 50, il suffit de la faire pivoter autour de l'axe d'articulation 13 qui relie l'élément supérieur 2 à l'abri technique S. Ce mouvement pivotant de la jambe 1 est obtenu à partir du pivotement du levier 16 articulé à l'élément intermédiaire 20 de la jambe 1. Plus précisément, le moteur 6 est commandé pour que le mouvement de rotation qu'il imprime à l'axe 7 par son arbre de sortie 6a, entraîne la rotation de la vis 10 qui se visse simultanément par sa tête 10a à l'intérieur de l'élément supérieur 2 et par sa tige 10b dans l'écrou 12. Le sens de rotation du moteur 6 est tel que la vis 10 descend à l'intérieur de l'élément supérieur 2 en entraînant le coulissement de l'élément inférieur 3 qui s'étend progressivement au-delà de l'élément supérieur 2. Cependant, dès que l'élément inférieur 3 commence à coulisser, il entraîne par l'intermédiaire de la bielle 17 le pivotement du levier 16 autour de l'axe d'articulation 21 supporté par l'abri technique S. Etant donné que l'élément intermédiaire 20 de la jambe 1 est monté articulé sur le levier 16, la jambe 1 va pivoter autour de l'axe d'articulation 13 et prendre une position inclinée qui est schématisée à la figure 4b.

Dans la seconde phase de déploiement de la jambe 1, comme cela est schématiquement illustré aux figures 4c et 4d, la jambe 1 continue à se déployer par l'action combinée de quatre mouvements sous la seule commande du moteur 6 : le déplacement axial de l'élément inférieur 3 par rapport à l'élément supérieur 2, le pivotement du levier 16, le coulissement de l'élément intermédiaire 20 et le pivotement de la jambe 1. A la fin de cette seconde phase de déploiement, comme visible à la figure 4e, la jambe 1 a pivoté d'un angle a par rapport à sa position verticale initiale à l'intérieur de son logement 50, et le patin 25 situé à l'extrémité libre de l'élément inférieur 3 est situé à une distance d1 du sol.

On va considérer maintenant la position des trois axes d'articulation A1, A2 et A3 entre le levier 16 et l'élément intermédiaire 20 au cours de ces deux phases de déploiement. Lorsque la jambe 1 est en position repliée et en se reportant à la figure 3a :
- l'axe A1 n'est pas situé au fond des lumières 36 associées et il n'a aucune action,
- l'axe A2 est à une extrémité des lumières 37 associées, et il forme l'axe de pivotement au cours des deux premières phases de déploiement précitées,
- l'axe A3 se déplace dans les lumières 38 associées pour forcer le levier 16 à pivoter autour de l'axe A2.

Avant la fin de la seconde phase de déploiement de la jambe 1 (figure 4d), il est à noter que l'angle d'inclinaison de la jambe 1 par rapport à la verticale est passé par une valeur maximale a1.

Au cours de la troisième phase de déploiement de la jambe 1, le patin 35 parcourt la distance d1 qui le sépare du sol suivant une trajectoire sensiblement verticale. Cette trajectoire est obtenue par le changement d'axe de pivotement du levier 16 qui n'est plus l'axe A2, mais l'axe A1. La figure 3b illustre la position des axes A1, A2 et A3 au cours de la troisième phase de déploiement de la jambe 1, l'axe A3 forçant le levier 16 à pivoter autour de l'axe A1.

Ainsi, grâce à ce dispositif d'articulation 30, il est possible d'obtenir à la fin de course de déploiement des jambes, un écart sensiblement constant entre les patins 25. Bien entendu, cet avantage ne peut être obtenu qu'à la condition que les jambes 1 se déploient sur une longueur suffisante.

A la fin de la troisième phase de déploiement (figure 4f), le patin 25 prend appui sur le sol, et les moteurs 6 des quatre jambes 1 sont stoppés, ce qui assure automatiquement le maintien en position des jambes sans recourir nécessairement à des moyens de verrouillage complémentaires.

Bien évidemment, la longueur déployée de chaque jambe 1 peut être ensuite réglée individuellement pour tenir compte des défauts de planéité du sol.

D'une manière générale, l'abri technique S peut rester en appui sur la plate-forme 41 du véhicule transporteur 42, mais il peut également être autonome afin de libérer le véhicule transporteur 42. Pour cela, il suffit de commander à nouveau les moteurs 6 des jambes 1 pour soulever l'abri technique S de la plate-forme 41 d'une hauteur suffisante pour permettre au véhicule de se dégager.

Pour le repliement de chaque jambe 1, il suffit de commander le moteur 6 associé dans le sens de rotation inverse pour ramener la jambe dans son logement 50.

En moyenne, les jambes de stabilisation conformes à l'invention permettent de supporter et de stabiliser des abris techniques de plusieurs tonnes à des hauteurs de 1 à 2 mètres par rapport au sol.

Dans le mode de réalisation considéré précédemment, chaque jambe 1 en position repliée vient se loger avantageusement dans un logement 50 prévu dans l'abri technique S. Comme schématiquement représenté à la figure 2, le logement 50 peut faire partie d'un support 51 autonome qui vient se fixer ensuite sur l'abri technique S.

Bien entendu, l'invention n'est nullement limitée à ce mode de réalisation, et elle comprend tous les moyens techniques équivalents à ceux précédemment décrits et donnés uniquement à titre d'exemple. En particulier, le système de déploiement peut être un vérin hydraulique télescopique à plusieurs tiges par exemple, ou un vérin à vis à rouleaux ou à billes. Enfin, les moyens d'articulation 30 prévus entre le levier 16 et l'élément intermédiaire 20 peuvent être déplacés au niveau de l'axe d'articulation 21 du levier 16 sur l'abri technique S.

## Revendications

1. Jambe de stabilisation formant pied d'appui pour une structure transportable telle qu'un abri technique, du type comprenant au moins deux éléments tubulaires coaxiaux respectivement supérieur et inférieur, assemblés l'un à l'autre de manière télescopique par un système de déploiement pour éloigner ou rapprocher axialement les deux éléments l'un de l'autre suivant que la jambe passe d'une position repliée où les deux éléments sont emboîtés l'un dans l'autre et positionnés suivant un axe sensiblement vertical, à une position dépliée où les deux éléments sont éloignés l'un de l'autre, ou inversement passe de la position dépliée à la position repliée, caractérisée en ce que la jambe (1) est articulée de façon pivotante sur l'abri technique (S), le mouvement pivotant de la jambe (1) étant contrôlé par un système de pivotement (15) articulé à l'abri technique (S) et actionné par le système de déploiement (4) de la jambe (1).

2. Jambe selon la Revendication 1, caractérisée en ce que le système de pivotement (15) de la jambe (1) comprend un levier (16) articulé de façon pivotante par une extrémité à l'abri technique (S), une bielle de liaison (17) dont les deux extrémités sont respectivement articulées à l'autre extrémité du levier (16) et à l'extrémité libre de l'élément inférieur (3), et un troisième élément tubulaire ou élément intermédiaire (20) articulé au levier (16) monté coulissant sur les éléments supérieur (2) et inférieur (3) de la jambe (1).

3. Jambe selon la Revendication 2, caractérisée en ce que le système de déploiement (4) comprend un organe de commande (6) pour déplacer axialement l'élément inférieur (3) par rapport à l'élément supérieur (2), le déplacement de l'élément inférieur (3) entraînant simultanément le pivotement du levier (16), le pivotement de la jambe (1) et le coulissement de l'élément intermédiaire (20).

4. Jambe selon la revendication 2 ou 3, caractérisée en ce qu'elle est montée pivotante à l'abri technique (S) par son élément supérieur (2) autour d'un axe horizontal (13), en ce que le levier (16) est articulé à l'abri technique (S) autour d'un axe horizontal (21) situé à un niveau inférieur à celui de l'axe (13) par rapport au sol, ces deux axes (13 et 21) étant sensiblement dans un même plan vertical.

5. Jambe selon la revendication 4, caractérisée en ce qu'en position repliée de la jambe (1), les éléments supérieur (2) et inférieur (3) sont emboîtés l'un dans l'autre à l'intérieur de l'élément intermédiaire (20) dont la largeur est légèrement inférieure à la distance séparant les deux axes d'articulation (13 et 21) de la jambe (1) à l'abri technique (S).

6. Jambe selon la revendication 5, caractérisée en ce qu'en position repliée, la longueur de la jambe (1) correspond à la longueur de l'élément intermédiaire (20) qui est situé sensiblement dans le même plan vertical que les axes d'articulation (13 et 21) de la jambe (1) à l'abri technique (S).

7. Jambe selon la revendication 6, caractérisée en ce que la jambe (1) en position repliée est située à l'intérieur d'un logement (50) ouvert vers l'extérieur de l'abri technique (S).

8. Jambe selon l'une quelconque des revendications précédentes, caractérisée en ce qu'elle comprend des moyens (30) associés au levier (16) pour qu'un patin (25) monté articulé à l'extrémité libre de l'élément inférieur (3) de la jambe (1) ait un mouvement de descente sensiblement vertical vers la fin de la course de déploiement de la jambe (1).

9. Jambe selon la revendication 8, caractérisée en ce que les moyens (30) comprennent plusieurs axes d'articulation (A1, A2, A3) entre le levier (16) et l'élément intermédiaire (20), mobiles respectivement dans des lumières (36, 37, 38) du levier (16).

10. Jambe selon la revendication 9, caractérisée en ce que les moyens (30) comprennent trois axes d'articulation (A1,A2,A3), le levier (16) pivotant successivement autour des axes (A2 et A1), l'axe (A3) forçant le levier (16) à pivoter autour de l'axe (A3) puis de l'axe (A1) lors du déploiement de la jambe (1).

11. Jambe selon la revendication 8, caractérisée en ce que les moyens (30) sont situés au niveau de l'articulation entre le levier (16) et l'abri technique (S).

12. Jambe selon l'une quelconque des revendications précédentes, caractérisée en ce que le système de déploiement (4) est constitué d'un dispositif de liaison télescopique (5) monté entre les éléments supérieur (2) et inférieur (3), et actionné par un moteur (6) logé à l'intérieur de l'élément supérieur (2).

13. Jambe selon la revendication 12, caractérisée en ce que le dispositif de liaison télescopique (5) comprend un axe d'entraînement (7) logé à l'intérieur de l'élément supérieur (2) et dont une extrémité est solidaire en rotation de l'arbre de sortie (6a) du moteur (6), l'autre extrémité de l'axe (7) s'engageant dans la tête (10a) d'une vis creuse (10) solidaire en rotation de l'axe (7), ce dernier pouvant coulisser dans la tige creuse (10b) de la vis 10, la tête (10a) filetée extérieurement se vissant dans la paroi interne filetée de l'élément supérieur (2), et la tige creuse (10b) filetée extérieurement se vissant dans un écrou (12) immobilisé en rotation dans l'élément inférieur (3).

14. Jambe selon la revendication 13, caractérisée en ce que la vis (10) est du type à rouleaux ou à billes.

15. Abri technique transportable, caractérisé en ce qu'il est stabilisé au sol par des jambes telles que définies par l'une quelconque des revendications précédentes.
